# EUROPEAN PATENT APPLICATION

(11) **EP 4 600 281 A1**
(43) Date of publication of application: **13.08.2025**
(21) Application number: 23874290.2
(22) Date of filing: 25.09.2023
(51) Int. Cl.: C08F 230/08, C08F 220/60, C08F 220/20

(54) **ORGANOSILICON POLYMER AND USE THEREOF**

(30) Priority: 04.10.2022 CN 202211217513
(71) Applicant: Beijing Mapu New Materials Co., Ltd., Beijing 100192 (CN)
(72) Inventor: JIANG, Lingfei, Beijing 100192 (CN); KONG, Xiangjing, Beijing 100192 (CN)
(74) Representative: Grünecker Patent- und Rechtsanwälte PartG mbB
(86) International application number: PCT/CN2023/121147
(87) International publication number: WO 2024/074098

(57) **Abstract**

The present application relates to an organosilicon polymer and a use thereof. The organosilicon polymer comprises a repeating unit generated by a silicon-containing monomer I-1 and an optional silicon-containing monomer I-2 and a repeating unit generated by a monomer II. The polymer or a treating agent containing the polymer can be used for treating various articles such as textiles, paper products, and stones, and provides the articles with an oil and water repelling function.

## Description

### Cross reference to related application

The present application claims priority to the Chinese patent application filed on October 4, 2022, with the application number 202211217513.9, titled "Organosilicon polymer and use thereof", the content of which is incorporated herein by reference in its entirety.

### Field of the Invention

The present application relates to an organosilicon polymer, a treating agent including the organosilicon polymer, and a preparation method and use thereof.

### Background of the Invention

In recent years, due to the increasing attention of the international community to polyfluoroalkyl substance (PFAS) which had been considered highly stable and not easily degradable, the US Environmental Protection Agency (EPA) has published a relevant report: "preliminary risk assessment of the development toxicity associated with exposure of perfluorooctanoic acid and its salts(http://www.epa.gov/opptintr/pfoa/pfoara.pdf), indicating the concern about the environmental load related to PFAS substances. At the same time, the US Environmental Protection Agency announced that a telomer may possibly metabolize or decompose to PFOA, Federal Register (FR Vol68, No. 73/April 16,2003[FRL-2303-8], http://www.epa.gov/opptintr/pfoa/pfoar.pdf). EPA Environmental News For Release: Monday April 14, 2003EPA intensifies scientific investigation of a chemical processing aid(http://www.epa.gov/opptintr/pfoa/pfoafacts.pdf). It also announced that the related telomer products are widely used in fabric finishing, paper, leather, firefighting foam and care products. Fluorinated treatment agents are considered to be one of the sources of PFAS.

In view of the above circumstances, some new non-fluorinated compounds have been proposed to replace existing fluorine-containing finishing agents. CN107849187A discloses a copolymer formed by copolymerizing an acrylic ester with a monomer such as vinyl chloride. When applied to textiles, the resulting polymer demonstrates excellent water-repellency. CN110114435A proposes a treatment agent using a copolymer of an acrylate ester to combine with a wax emulsion and the like, which shows excellent water-repellency when applied to textiles. CN105377935B uses a polyurethane aqueous dispersion to treat textiles, providing excellent water-repellency. However, these polymers have poor oil-repellency.

CN103975107B proposes the solution by using barrier coatings. The patent mainly use the means of emulsion polymerization to produce a polymer emulsion by adding starch and a surfactant, and then apply it to the paper by coating. Although such solution can block the permeation of oil and grease, it has the following two problems. First, a significant amount of coating is required to achieve oil resistance. Second, it is only applicable to paper machines equipped with coating devices, and cannot be directly implemented on general paper machines, resulting in limited process adaptability and higher costs. CN112513370 proposes a method using long-chain acrylate copolymers to treat paper, achieving oil and water-repellency. However, this method shows poor resistance to hot oils above 80°C. Therefore, there is a need in the field to develop a treating agent with improved oil-repellency.

### Summary of the Invention

The aim of the present application is to provide an organosilicon polymer and a treating agent containing the polymer. The polymer and treating agent can be used to treat a variety of articles, thereby imparting oil- and water-repellent properties to the surfaces of the articles.

In a first aspect, the present application provides an organosilicon polymer comprising a repeating unit derived from a monomer I and a repeating unit derived from a monomer II, wherein the monomer I comprises a silicon monomer I-1 and an optional silicon monomer I-2,
a) the general structural formula of the silicon monomer I-1 is shown in Formula I-1:

   CH₂=C(R₁)-X-B-Z₁ I-1

   in Formula I-1, R₁ is selected from hydrogen atom or a C₁₋C₂₀ alkyl group; B is a C₁-C₂₀ alkylene group;
   X is selected from the group represented by X-1 and the group represented by X-2,

      -C(O)-O- X-1

      -C(O)-N(R₂)- X-2
   R₂ is selected from hydrogen atom or a C₁₋C₂₀ alkyl group;
   Z₁ is selected from the following group: 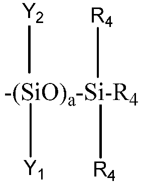
   in group Z₁, R₄ is independently selected from a C₁-C₂₀ alkyl group, a C₆-C₂₀ aryl group, a C₇-C₁₂ aralkyl group, a C₇-C₁₂ alkylaryl group, or a R₅-O-R₆- group, and R₅ is selected from a C₁-C₁₀ alkyl group, a C₆-C₂₀ aryl group, a C₇-C₁₂ aralkyl group, or a C₇-C₁₂ alkylaryl group, and R₆ is a C₁-C₁₀ alkylene group, and 1≤a≤200;
   Y₁ and Y₂ are the same or different and are independently selected from a C₁-C₂₀ alkyl group, a C₆-C₂₀ aryl group, a C₇-C₁₂ aralkyl group, or a C₇-C₁₂ alkylaryl group, and the structure of Formula (I), with the condition that when a is 1, Y₁ and/or Y₂ is the structure of Formula (I), and when a is greater than 1 and ≤ 200, at least one Y₁ is the structure of Formula (I) and/or at least one Y₂ is the structure of Formula (I): 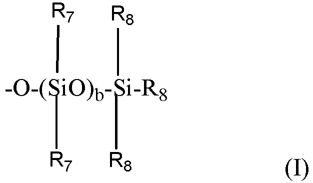
   R₇ is independently selected from a C₁-C₂₀ alkyl group, a C₆-C₂₀ aryl group, a C₇-C₁₂ aralkyl group, or a C₇-C₁₂ alkylaryl group; R₈ is independently selected from a C₁-C₂₀ alkyl group, a C₆-C₂₀ aryl group, a C₇-C₁₂ aralkyl group, a C₇-C₁₂ alkylaryl group, or a R₉-O-R₁₀- group, wherein R₉ is a C₁-C₁₀ alkyl group, a C₆-C₂₀ aryl group, a C₇-C₁₂ aralkyl group, or a C₇-C₁₂ alkylaryl group, and R₁₀ is a C₁-C₁₀ alkylene group, and 0≤b≤200;
   the general structural formula of the silicon monomer I-2 is shown in Formula I-2:

      CH₂=C(R₁)-X-B-Z₂ I-2
   in Formula I-2, R₁ is selected from hydrogen atom or a C₁-C₂₀ alkyl group; B is a C₁-C₂₀ alkylene group;
   X is selected from the group represented by X-1 and the group represented by X-2,

      -C(O)-O- X-1

      -C(O)-N(R₂)- X-2
   R₂ is selected from hydrogen atom or a C₁-C₂₀ alkyl group,
   Z₂ is selected from the following group, 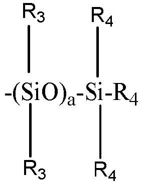
   in group Z₂, R₃ is independently selected from a C₁-C₂₀ alkyl group, a C₆-C₂₀ aryl group, a C₇-C₁₂ aralkyl group, or a C₇-C₁₂ alkylaryl group, and R₄ is selected from a C₁-C₂₀ alkyl group, a C₆-C₂₀ aryl group, a C₇-C₁₂ aralkyl group, a C₇-C₁₂ alkylaryl group, or a R₅-O-R₆- group, and R₅ is selected from a C₁-C₁₀ alkyl group, a C₆-C₂₀ aryl group, a C₇-C₁₂ aralkyl group, or a C₇-C₁₂ alkylaryl group, and R₆ is a C₁-C₁₀ alkylene group, and 1≤a≤200;
b) the general structural formula of the monomer II is shown in Formula II:

   CH₂=C(R₁)-C(O)-NR₂-B-N(R₃R₄) II

   wherein R₁ and R₂ are independently selected from hydrogen atom or a C₁-C₂₀ alkyl group; B is a C₁-C₂₀ alkylene group; R₃ and R₄ are independently selected from hydrogen atom, a C₁₋C₁₈ alkyl group, a hydroxyethyl group or a benzyl group, or R₃ and R₄ are jointed and, together with the nitrogen atom, form a morpholino group, a piperidino group, or a pyrrolidino group.

The inventors unexpectedly discovered that when the aforementioned silicon monomer I-1 is used for polymerization, the oil-repellent performance is significantly enhanced, and the oil-repellent efficiency is markedly increased, that is a less added amount can still achieve excellent oil-repellent effects. When a combination of the aforementioned silicon monomers I-1 and I-2 is employed, the resulting polymer can achieve a balanced performance profile, such as the equilibrium between oil-repellency and water-repellency.

According to some embodiments of the present application, the organosilicon polymer further comprises a repeating unit derived from monomer III,
c) the general structural formula of the monomer III is shown in Formula III:

   CH₂=C(R₁)-G-(R₂O)_{q}-R₃ III
in Formula III, R₁ represents hydrogen atom or methyl, R₂ is independently a C₁-C₆ alkylene group, preferably a C₂-C₄ alkylene group, q is an integer from 1 to 50, preferably from 1 to 20; R₃ represents hydrogen atom or a C₁-C₂₀ alkyl group, preferably hydrogen atom or a C₁-C₁₀ alkyl group, more preferably hydrogen atom or a C₁-C₃ alkyl group;
wherein G is selected from the group represented by G-1 and the group represented by G-2,

   -C(O)-O-(CH₂)ₙ- G-1

   -C(O)-N(R₄)-(CH₂)ₙ- G-2
R₄ represents hydrogen atom or methyl, n is an integer from 0 to 10, preferably from 0 to 5.

According to some embodiments of the present application, based on the mass percentage, the proportion of repeating units derived from the silicon monomer I-1 in the total amount of repeating units derived from the silicon monomer I-1 and the silicon monomer I-2 is 1% to 100%, 5% to 100%, 10% to 100%, or 50% to 100%, for example, 1%, 5%, 10%, 20%, 25%, 30%, 35%, 40%, 45%, 50%, 55%, 60%, 65%, 70%, 75%, 80%, 85%, 90%, 95%, 98%, or any range formed by any two of these values. The total amount of repeating units derived from the silicon monomer I-1 and the silicon monomer I-2 is equivalent to the total amount of repeating units derived from the monomer I.

According to some embodiments of the present application, the mass content of repeating units derived from the monomer I is 30% to 90%, preferably 40% to 85%, more preferably 50% to 80%, for example, 35%, 40%, 45%, 50%, 55%, 60%, 65%, 70%, 75%, 80%, 85%, 90%, or any range formed by any two of these values.

According to some embodiments of the present application, the mass content of repeating units derived from the monomer II is 5% to 65%, preferably 10% to 50%, more preferably 15% to 45%, for example, 5%, 10%, 20%, 25%, 35%, 40%, 45%, 50%, 55%, 60%, 65%, or any range formed by any two of these values.

According to some embodiments of the present application, the mass content of repeating units derived from the monomer III is 1% to 30%, preferably 3% to 15%, more preferably 5% to 10%, for example, 1%, 3%, 5%, 8%, 10%, 15%, 20%, 25%, 30%, or any range formed by any two of these values.

According to some embodiments of the present application, in the silicon monomer I-1 and the silicon monomer I-2, R₁ is selected from hydrogen atom or methyl.

According to some embodiments of the present application, in the silicon monomer I-1 and the silicon monomer I-2, B is a C₁-C₁₀ alkylene group, preferably a C₁-C₆ alkylene group.

According to some embodiments of the present application, in group X, R₂ is selected from hydrogen atom or methyl.

According to some embodiments of the present application, in group Z₁, R₄ is independently selected from a C₁-C₁₀ alkyl group, a C₆-C₁₀ aryl group, a C₇-C₁₂ aralkyl group, a C₇-C₁₂ alkylaryl group, or a R₅-O-R₆- group, and R₅ is selected from a C₁-C₁₀ alkyl group, a C₆-C₁₀ aryl group, a C₇-C₁₂ aralkyl group, or a C₇-C₁₂ alkylaryl group, and R₆ is a C₁-C₁₀ alkylene group, and/or 1≤a≤80;

R₇ is independently selected from a C₁-C₁₀ alkyl group, a C₆-C₁₀ aryl group, a C₇-C₁₂ aralkyl group, or a C₇-C₁₂ alkylaryl group; and R₈ is independently selected from a C₁-C₁₀ alkyl group, a C₆-C₁₀ aryl group, a C₇-C₁₂ aralkyl group, a C₇-C₁₂ alkylaryl group, or a R₉-O-R₁₀- group, wherein R₉ is a C₁-C₁₀ alkyl group, a C₆-C₁₀ aryl group, a C₇-C₁₂ aralkyl group, or a C₇-C₁₂ alkylaryl group, and R₁₀ is a C₁-C₁₀ alkylene group, and/or 0≤b≤80.

According to some embodiments of the present application, in group Z₁, R₄ is independently selected from a C₁-C₆ alkyl group, a C₆-C₁₀ aryl group, a C₇-C₁₀ aralkyl group, a C₇-C₁₀ alkylaryl group, or a R₅-O-R₆- group, and R₅ is selected from a C₁-C₆ alkyl group, a C₆-C₁₀ aryl group, a C₇-C₁₀ aralkyl group, or a C₇-C₁₀ alkylaryl group, and R₆ is a C₁-C₆ alkylene group, and/or 1≤a≤30;

R₇ is independently selected from a C₁-C₆ alkyl group, a C₆-C₁₀ aryl group, a C₇-C₁₀ aralkyl group, or a C₇-C₁₀ alkylaryl group; and R₈ is independently selected from a C₁-C₆ alkyl group, a C₆-C₁₀ aryl group, a C₇-C₁₀ aralkyl group, a C₇-C₁₀ alkylaryl group, or a R₉-O-R₁₀- group, wherein R₉ is a C₁-C₆ alkyl group, a C₆-C₁₀ aryl group, a C₇-C₁₀ aralkyl group or a C₇-C₁₀ alkylaryl group, and R₁₀ is a C₁-C₆ alkylene group, and/or 0≤b≤30.

In some embodiments, a is an integer from 1 to 80, an integer from 1 to 30, an integer from 1 to 20, or an integer from 1 to 10.

In some embodiments, b is 0. In some embodiments, b is an integer from 1 to 30, an integer from 1 to 20, an integer from 1 to 10, or an integer from 1 to 5.

In some embodiments, the group Z₁ is selected from one or more of the following structures i-1 to i-4: 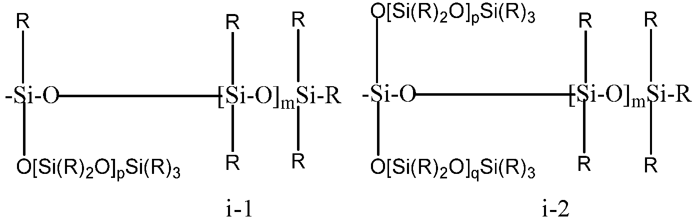 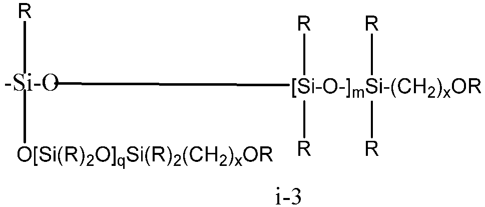 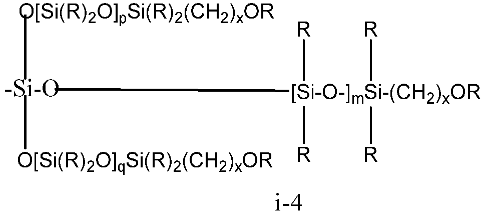
wherein Ris independently selected from a C₁-C₁₀ alkyl group, a C₆-C₁₀ aryl group, a C₇-C₁₂ aralkyl group, or a C₇-C₁₂ alkylaryl group;
1≤m+1≤60, preferably 1≤m+1≤30; 0≤p≤60, preferably 0≤p≤30; 0≤q≤60, preferably 0≤q≤30; 1≤x≤9, preferably 1≤x≤7, each x can be the same or different.

In some embodiments, R is a C₁-C₃ alkyl group, such as methyl.

In some preferred embodiments, the group Z₁ is selected from one or more of the following structures: 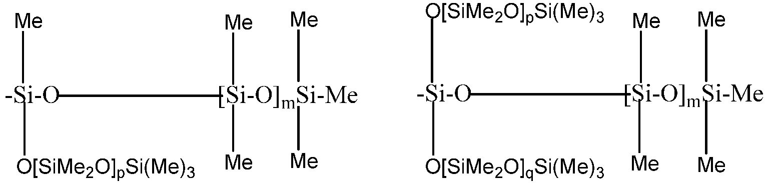 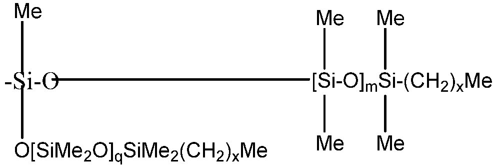 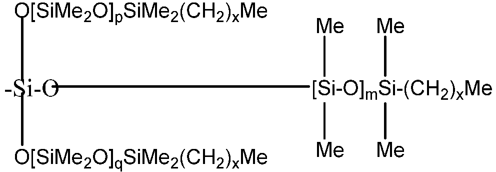 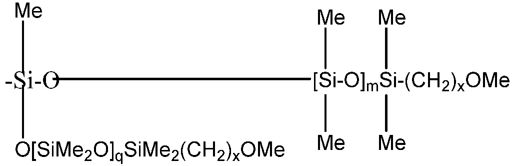 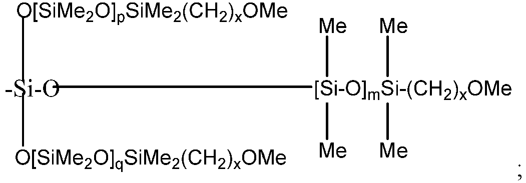 wherein Me represents methyl, 1≤m+1≤60, preferably 1≤m+1≤30; 0≤p≤60, preferably 0≤p≤30; 0≤q≤60, preferably 0≤q≤30; 1≤x≤9, preferably 1≤x≤7, each x can be the same or different.

According to some embodiments of the present application, in group Z₂, R₃ is independently selected from a C₁-C₁₀ alkyl group, a C₆-C₁₀ aryl group, a C₇-C₁₂ aralkyl group, or a C₇-C₁₂ alkylaryl group, and R₄ is selected from a C₁-C₁₀ alkyl group, a C₆-C₁₀ aryl group, a C₇-C₁₂ aralkyl group, or a C₇-C₁₂ alkylaryl group, or a R₅-O-R₆- group, and R₅ is selected from a C₁-C₁₀ alkyl group, a C₆-C₂₀ aryl group, a C₇-C₁₂ aralkyl group, or a C₇-C₁₂ alkylaryl group, and R₆ is a C₁-C₁₀ alkylene group.

According to some embodiments of the present application, in group Z₂, 1≤a≤80. According to some embodiments of the present application, in group Z₂, 1≤a≤30. According to some embodiments of the present application, in group Z₂, 1≤a≤20. According to some embodiments of the present application, in group Z₂, 1≤a≤10.

According to some embodiments of the present application, in group Z₂, R₃ is independently selected from a C₁-C₆ alkyl group, a C₆-C₁₀ aryl group, a C₇-C₁₀ aralkyl group, or a C₇-C₁₀ alkylaryl group, and R₄ is selected from a C₁-C₆ alkyl group, a C₆-C₁₀ aryl group, a C₇-C₁₀ aralkyl group, or a C₇-C₁₀ alkylaryl group, or a R₅-O-R₆- group, and R₅ is selected from a C₁-C₆ alkyl group, a C₆-C₁₀ aryl group, a C₇-C₁₀ aralkyl group, or a C₇-C₁₀ alkylaryl group, and R₆ is a C₁-C₁₀ alkylene group, 1≤a≤10.

According to some embodiments of the present application, the group Z₂ is selected from one or more of the following structures ii-1 to ii-2: 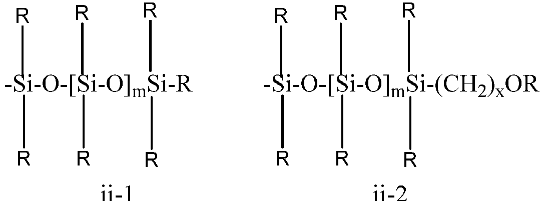
wherein Ris independently selected from a C₁-C₁₀ alkyl group, a C₆-C₁₀ aryl group, a C₇-C₁₂ aralkyl group, or a C₇-C₁₂ alkylaryl group;
1≤m+1≤60, preferably 1≤m+1≤30; 1≤x≤9, preferably 1≤x≤7.

Preferably, the group Z₂ is selected from one or more of the following structures: 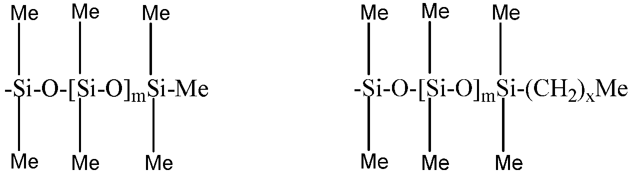 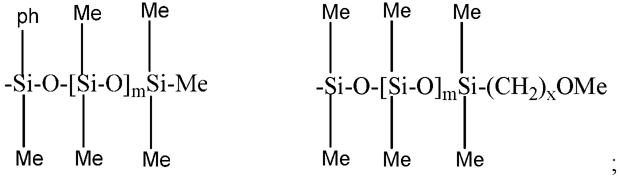 wherein Me represents methyl, ph represents phenyl, 1≤m+1≤60, preferably 1≤m+1≤30; 1≤x≤9, preferably 1≤x≤7.

In some embodiments, m is 0, 1, 2, 3, 4, 5, 6, 7, 8, or 9.

In some embodiments, x is 1, 2, 3, 4, 5, 6, or 7.

According to some embodiments of the present application, in the monomer II, R₁ and R₂ are selected from hydrogen atom or methyl; B is a C₁-C₆ alkylene group; R₃ and R₄ are independently selected from a C₁-C₃ alkyl group, a hydroxyethyl group or a benzyl group, or R₃ and R₄ are jointed and, together with the nitrogen atom, form a morpholino group, a piperidino group, or a pyrrolidino group.

According to some embodiments of the present application, the silicon monomer I-1 is selected from:

CH₂=C(CH₃)C(O)-O-(CH₂)₃Si(OSi(CH₃)₃)₃,

CH₂=CHC(O)-O-(CH₂)₃Si(OSi(CH₃)₃)₃,

CH₂=C(CH₃)C(O)-O-(CH₂)₃Si(CH₃)(OSi(CH₃)₃)₂,

CH₂=CHC(O)-O-(CH₂)₃Si(CH₃)(OSi(CH₃)₃)₂,

CH₂=C(CH₃)C(O)-NH-(CH₂)₃Si(OSi(CH₃)₃)₃,

CH₂=CHC(O)-NH-(CH₂)₃Si(OSi(CH₃)₃)₃,

CH₂=C(CH₃)C(O)-NH-(CH₂)₃Si(CH₃)(OSi(CH₃)₃)₂,

CH₂=CHC(O)-NH-(CH₂)₃Si(CH₃)(OSi(CH₃)₃)₂,

CH₂=C(CH₃)C(O)-O-(CH₂)₃Si(OSi(CH₂CH₃)₃)₃,

CH₂=CHC(O)-O-(CH₂)₃Si(OSi(CH₂CH₃)₃)₃,

CH₂=C(CH₃)C(O)-O-CH₂-Si(OSi(CH₃)₃)₃,

CH₂=C(CH₃)C(O)-O-(CH₂)₃Si(CH₃)[O-[Si(CH₃)₂O]n-Si(CH₃)₂C₄H₉]₂ (0≤n≤25).

According to some embodiments of the present application, the silicon monomer I-2 is selected from:

CH₂=C(CH₃)C(O)-O-(CH₂)₃[Si(CH₃)₂O]n-Si(CH₃)₂C₄H₉ (1≤n≤25),

CH₂=C(CH₃)C(O)-O-(CH₂)₃[Si(CH₃)₂O]n-Si(CH₃)₂C₈H₁₇ (1≤n≤25),

CH₂=C(CH₃)C(O)-O-(CH₂)₃[Si(CH₃)₂O]n-Si(CH₃)₃ (1≤n≤25).

According to some embodiments of the present application, the monomer II is selected from one or more of the following: dimethylaminoethyl (meth)acrylamide, diethylaminoethyl (meth)acrylamide, dipropylaminoethyl (meth)acrylamide, dimethylaminopropyl (meth)acrylamide, diethylaminopropyl (meth)acrylamide, and dipropylaminopropyl (meth)acrylamide.

According to some embodiments of the present application, the monomer III is selected from one or more of the following: 2-hydroxyethyl (meth)acrylate, 2-hydroxypropyl (meth)acrylate, 2-hydroxybutyl (meth)acrylate, 4-hydroxybutyl (meth)acrylate, polyethylene glycol mono(meth)acrylate, polypropylene glycol mono(meth)acrylate, and methoxy polyethylene glycol (meth)acrylate, preferably hydroxyethyl methacrylate, 4-hydroxybutyl acrylate.

According to some embodiments of the present application, the weight average molecular weight of the polymer is 1,000 to 2,000,000, preferably 5,000 to 1,500,000. According to some embodiments of the present application, the polymer is in the form of an ammonium salt or a nitrogen oxide.

The present application further provides a treating agent comprising the aforementioned organosilicon polymer and a solvent, and the solvent comprises water and/or an organic solvent.

In some embodiments, the organic solvent is one or more of acetone, methyl ethyl ketone, 4-methyl-2-pentanone, ethyl acetate, butyl acetate, N-methyl-2-pyrrolidone, N,N-dimethyl formamide, ethanol, isopropanol, n-propanol, butyl carbitol, and dipropylene glycol methyl ether.

The present application also pertains to a method for manufacturing the aforementioned treating agent, which comprises the following steps:
(1) polymerizing monomers (including the monomer I, the monomer II, and optionally the monomer III) in an organic solvent to obtain a polymer solution.

According to some embodiments of the present application, by mass, the proportion of the silicon monomer I-1 in the total amount of the silicon monomer I-1 and the silicon monomer I-2 ranges from 1% to 100%, 5% to 100%, 10% to 100%, 50% to 100%, or 50% to 98%, for example, 1%, 5%, 10%, 20%, 25%, 30%, 35%, 40%, 45%, 50%, 55%, 60%, 65%, 70%, 75%, 80%, 85%, 90%, 95%, 98%, or any range formed by any two of these values.

According to some embodiments of the present application, by mass, the proportion of the monomer I in the total amount of monomers ranges from 30% to 90%, preferably from 40% to 85%, more preferably from 50% to 80%, for example, 35%, 40%, 45%, 50%, 55%, 60%, 65%, 70%, 75%, 80%, 85%, 90%, or any range formed by any two of these values.

According to some embodiments of the present application, the proportion of the monomer II in the total amount of monomers ranges from 5% to 65%, preferably from 10% to 50%, more preferably from 15% to 45%, for example, 5%, 10%, 20%, 25%, 35%, 40%, 45%, 50%, 55%, 60%, 65%, or any range formed by any two of these values.

According to some embodiments of the present application, the proportion of the monomer III in the total amount of monomers ranges from 0% to 30%, preferably from 1% to 30%, more preferably from 3% to 15%, and further preferably from 5% to 10%, for example, 1%, 3%, 5%, 8%, 10%, 15%, 20%, 25%, 30%, or any range formed by any two of these values.

As appropriate, the manufacturing method may also include any one or more of the following steps (2), (3), and (4):
(2) adding water to the polymer solution for dispersion, and then removing the organic solvent; or removing the solvent firstly and then adding water for dispersion;
(3) adding an acid to the polymer solution for converting an amino group into an ammonium salt;
(4) adding an oxidizing agent (e.g., hydrogen peroxide) to convert the amino group in the polymer into a nitrogen oxide.

In addition, the present application further provides a use of the organosilicon polymer aforementioned or thetreating agent aforementioned or the treating agent prepared by the aforementioned method in fiber fabrics, leathers, non-woven fabrics, asbestos, furs, concretes, natural stones, paper products or plastics.

The present application further provides a method for treating a product, comprising contacting the product with the aforementioned organosilicon polymer or the aforementioned treating agent or the treating agent prepared by the aforementioned method, and the product is fiber fabrics, leathers, non-woven fabrics, asbestos, furs, concretes, natural stones, paper products, or plastics,
preferably, the contacting is achieved through wet-end addition, surface sizing, or coating process.

In the present application, examples of the paper products include, but are not limited to, paper, paper-based carriers such as paper cups, paper bowls, paper plates, and the like.

### Effects of the invention

The organosilicon polymer of the present application and the resulting treating agent can be easily dispersed in water and used to the surface treatment of various articles, such as fiber fabrics, leathers, non-woven fabrics, asbestos, furs, concretes, natural stones, paper, and plastics. Treatment methods include coating, immersion, internal addition, and other approaches. The organosilicon polymer and the resulting treating agent can impart oil-repellent and water-repellent properties to the surface of the treated articles.

### Detailed description of the invention

In order to clarify the purpose, technical solution, and advantages of this application, further detailed explanations will be provided below in conjunction with the embodiments. These embodiments are only used to explain the present application and are not intended to constitute any limitation on the present application. The actual scope of protection of this application is described in the claims..

In the application, unless otherwise specified, the terms used are understood to have the general meanings known to those skilled in the art.

In the application, the term "alkyl" refers to a straight-chain or branched-chain alkyl group, non-limiting examples of which include: methyl, ethyl, n-propyl, isopropyl, n-butyl, sec-butyl, isobutyl, tert-butyl, n-pentyl, 1-ethylpropyl, 2-methylbutyl, 3-methylbutyl, 2,2-dimethylpropyl, n-hexyl, 2-methylpentyl, 3-methylpentyl, and the like.

In the application, the term "alkylene" refers to a straight-chain or branched-chain alkylene group, non-limiting examples of which include: methylene, ethylene, n-propylene, n-butylene, n-pentylene, -CHCH₃CH₂-, -CHCH₃CH₂CH₂-, CH₂CH₃CHCH₂-, and the like.

In the application, unless otherwise specified, "%" refers to mass percentage.

### I. Polymerization Method

The present application has no particular restriction on the polymerization mode of copolymer, which can be practiced by conventional free radical polymerization mode, such as bulk polymerization, solution polymerization in organic solvents and emulsion polymerization in water.

In the present application, it is preferred to obtain an aqueous dispersion through polymerization (such as solution polymerization or emulsion polymerization) followed by addition of water and then solvent removal; or alternatively, followed by solvent removal and then addition of water.

As initiator for polymerization, it can be selected from peroxides, azo compounds, or persulfuric acid compounds, and oil- or water- soluble initiator can be used depending on the polymerization system.

Examples of oil-soluble initiator for polymerization are preferably 2,2'-azodi(2-methyl propionitrile), 2,2'-azodi(2-methyl butyronitrile), 2,2'-azodi(2,4-dimethyl valeronitrile), 2,2'-azodi(2,4-dimethyl-4-methoxyvaleronitrile), 1,1'-azodi(cyclohexane-1-carbonitrile), dimethyl-2,2'-azodi(2-methyl propionate), benzoyl peroxide, di-tert-butyl peroxide, lauroyl peroxide, cumene hydroperoxide, tertbutyl peroxypivalate, diisopropyl peroxydicarbonate, and the like.

Examples of water-soluble initiator for polymerization are preferably 2,2'-azodiisobutyl imidine dihydrochloride, 2,2'-azodi(2-methyl propionamidine) hydrochloride, 2,2'-azobis[2-(2-imidazolin-2-yl)propane] hydrochloride, 2,2'-azobis[2-(2-imidazolin-2-yl)propane]sulfate hydrate, 2,2'-azobis[2-(5-methyl-imidazolin-2-yl)propane] hydrochloride, potassium persulfate, barium persulfate, ammonium persulfate, hydrogen peroxide, tertbutyl hydrogen peroxide, and the like.

The initiator for polymerization preferably has a half life of 10 hours, preferably being selected from peroxide or azo compound having a decomposition temperature of 40°C or more, such as tertbutyl peroxypivalate, 2,2'-azodi(2-methyl propionitrile) and the like.

A typical process of the solution polymerization of the present application may be implemented as follows:
adding a solvent followed by corresponding monomers to be dissolved, replacing the atmosphere with nitrogen for oxygen removal, adding an initiator, raising the temperature of the reaction to the desired reaction temperature, i.e., 40 to 120°C, and allowing the reaction to proceed for 4 to 20 hours.

The manufacturing procedure of the treating agent of the present application is as follows:
(1) adding monomers I and II, and an optional monomer III in a certain ratio into an organic solvent, followed by adding an initiator for polymerization;
(2) as appropriate, after the polymerization is completed, adding water for dispersion and removing the organic solvent;
(3) as appropriate, adding an acid to the polymer solution for converting an amino group into an ammonium salt;
(4) as appropriate, adding an oxidant to the aforementioned dispersion for oxidation treatment.

In the aforementioned step (1), by mass, the amount of the silicon monomer I-1 can account for 1% to 100%, 5% to 100%, 10% to 100%, or 50% to 100% of the total amount of the monomer I (the sum of the silicon monomer I-1 and the silicon monomer I-2).

### II. Testing methods

### Paper processing and testing procedures

Paper products that can be processed include light weight paper, thick paper, cardboards, mold pulp products or the like, varying from paper boxes weighting up to 300 g per unit area (m²) to kraft paper weighting up to 80 g per unit area (m²), from light weight paper sheet weighting up to 100 g per unit area (m²) to mold pulp products weighting up to 200 g per unit area (m²).

The raw materials for paper products can be chemical bleached pulp or unbleached pulp, wood pulp, chemi-machanical pulp, mechanical pulp, and the like, or the same pulp added with resin components such as polyamide, polyolefin, polyvinyl alcohol, and the like. The procedure for paper processing is as follows:

### (1) Wet end treatment: pulp molding weight 350 g/m²

Bagasse pulp boards are beaten in water with a pulp concentration of 0.3% until a Canadian Standard Freeness of 600 mL, to which is sequentially added alkyl ketene dimer (AKD) sizing agent at an amount of 2% parts by weight of the dry paper, and formulated treating agent at an amount of 1% to 15% parts by weight of the dry paper.

The paper pulp is poured at a specified weight into a filter screen in a 10 inch disc mold, vacuum filtered to remove water, and dried in the mold at 150°C for 120 seconds. The resulted disc tableware is subjected to evaluation for oil- and water-repellency.

### (2) Examples for surface sizing treatment:

### Production of test paper: paper weight 50 g/m²

Chemical pulp board LBKP (laubhǒlxer bleached kraft pulp) and NBKP (northern bleached kraft pulp) are mixed at a ratio of 5:5 and subjected to beating until a Canadian Standard Freeness of 200mL. During the paper making process, cationic starch MC-2 type available from Guangxi Mingyang Biochemical Company is added at an amount of 1% parts by weight of the pulp board. A light weight paper sheet with a weight of 50 g/m² was made using a fourdrinier machine.

The starch solution is made of a non-ionic modified hydroxyethyl starch, i.e., Penford Gum 290 starch available from Penford Company, with a concentration of 5%. The starch solution is firstly heated to more than 90°C to cook the starch, and followed by adding the formulated treating agent at a concentration of 1% to 15% parts by weight. The starch solution is controlled at a temperature of not less than 70°C and used for surface sizing until a wet pick up rate more than 70%. The sized pulp board is subjected to drying to obtain the treated paper.

### (3) Examples for surface coating treatment:

### Production of test paper: paper weight 230 g/m²

The paper is composed of five layers in which the bottom and top layers are made of chemical pulp board LBKP (laubhǒlxer bleached kraft pulp) and NBKP (northern bleached kraft pulp) in a ratio of 7:3; and the middle three layers are made of chemical pulp or mechanical pulp boards, which are composited on a paper machine to form a cardboard weighing 230 g/m².

The starch for coating is made of cassava starch MS-1 coating type available from Guangxi Mingyang Biochemical Company. The starch is added to water to a concentration of 20%, heated to more than 90°C to cook the starch, followed by adding formulated paper treating agent at a concentration of 1% to 15% (mass concentration). The starch is controlled at a temperature of not less than 50°C and coated onto the top layer of the cardboard using a paper coating machine, at a coat loading weight of 3 to 8 g/m².

### Evaluation of water and oil-repellency

The following examples and comparative examples are concrete illustrations of the present application, but the present application is not limited thereto. Unless specified otherwise, adding amounts in % refer to parts by weight.

The following test methods are used.

### Evaluation of oil-repellency

### (1) Hot-oil resistant test

The hot oil (salad oil, peanut oil, rapeseed oil) were treated paper is poured into the paper product at 85°C and held for 20 minutes to observe if there is any permeation. Rating by score is made based on observation results.
Score 5 represents no surface discoloration;
Score 4 represents minor surface discoloration;
Score 3 represents surface discoloration and minor permeation;
Score 2 represents severe permeation.

### Evaluation of water-repellency

### (1) Cobb test

This test is conducted according to the specification of GB/T1540-2002 or ISO 535:1991, and its principle is to determine the weight (g) of water absorbed by 100 cm² paper supporting water of a 10mm height during a time period of 1 minute. The result is reported as water weight per 1 square meter (g/m²).

The instrument used in Cobb absorption test is generally a flipped cylinder tester, wherein the metal cylinder is a cylindrical body, with an internal cross-sectional area of (100±0.2) cm² and a corresponding internal diameter of (112.8±0.2) mm. If a cylinder with small cross-sectional area is used, the cross-sectional area should generally not be less than 50 cm², and the volume of water should be reduced accordingly to ensure a liquid level height of 10 mm. The height of the cylinder is 50 mm, and the part for contacting the specimen should be smooth and sufficiently rounded, so that any damage to the specimen by the edge of the cylinder can be avoided. In order to prevent water leakage, an elastic but non-absorbent rubber pad or washer should be applied to the cover and the flat base of the flipped cylinder. The metal pressure roller should have a width of (200 ± 0.5) mm, a mass of (10 ± 0.5) kg, and a smooth surface.

10 pieces specimens (each 5 pieces for testing front and back surfaces) are cut from the processes paper, as squares with side length (125±5) mm or circles with a diameter ¢ of (125 ± 5) mm. For instruments with small testing areas, the size of the specimen should be slightly larger than the outer diameter of the cylinder to avoid any leakage due to too small specimen. On the other hand, too large should be avoided so as to prevent interference with operation.

Before placing the specimen, it should be ensured that both the internal surface of the cylinder and the rubber pad to be in contact with the specimen are dry, and any contact of hands with the testing area should be avoided. 100mL of water is added into the cylinder via measuring cylinder. A weighted specimen is placed on the circular surface of the cylinder with testing surface facing down and covered with press cover and clamped tightly to secure it with the cylinder.

The cylinder is turned upside down 180° and meanwhile turning on a stopwatch to count 60 seconds for water absorption. 10 to 15 seconds before the end of the water absorption time, the cylinder is turned back, the clamping device for press cover is released, and the specimen is recovered. Note that test water should be replaced after every 5 tests with a new one, to avoid any potential adverse effects on results. At the moment when the specified water absorption time elapses, the specimen that has been removed from the cylinder is placed on a blotting paper spread in advance, with the water absorption surface facing down, covered on its top by another sheet of blotting paper, and immediately rolled by a metal roller forth and back once over 4 seconds without any further applied pressure, to absorb any remaining water on the surface of the specimen. The specimen is taken out quickly, and folded with the water absorption surface inside, and then folded once more and weighted to the accuracy of 0.001g. For specimens of thick cardboard that may not be easily folded, the second weighing should be carried out as soon as possible.
Cobb value is calculated by the formulae: C= (g2-g1) /F
Wherein: C refers to cobb value;
g2-specimen weight after water absorption;
g1-specimen weight before water absorption;
F-100cm² testing area;

### (2) Hot-water resistant test

This test directly evaluates the hot-water resistant ability of paper. The testing method is relatively simple and generally comprises making the treated paper into a container that can hold liquid, pouring 100°C boiling water into the container, and observing for 30 minutes for any leakage. If there is no leakage, it is considered as passing. This method is suitable for mold pulp products.

### Stone treating and testing methods:

The natural stones that can be treated include marbles, granites, sandstones, slates, etc.

Taking sandstones as an example, a sample of sandstone is soaked in a liquid that is obtained by diluting the treating agent with water to a certain factor, removed from the soaking liquid, dried in air for 48 hours at a temperature not lower than 25°C, and then dropped thereon with salad oil, mustard sauce, coffee, vinegar, and the like to observe the permeation state. No permeation means better barrier performance.
Score 5 represents no surface discoloration;
Score4 represents slight surface discoloration;
Score 3 represents surface discoloration and slight permeation;
Score 2 represents severe permeation.

### III. Examples and Comparative Examples

The abbreviations of chemicals are shown in Table 1:

**Table 1**

| the Abbreviation in Examples and Comparative Examples | Structural formula |
|---|---|
| **Si-B3** | 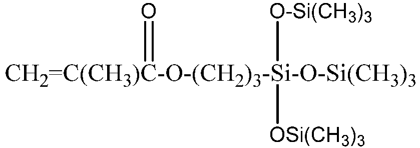 |
| **Si-5** | 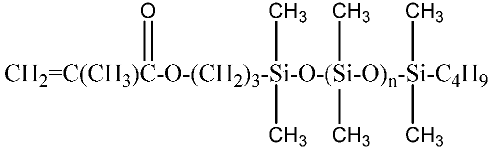 |
| **Si-B3H** | 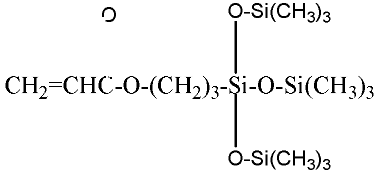 |
| **Si-B2** | 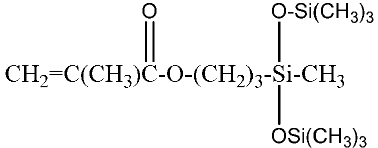 |
| **Si-NB3** | 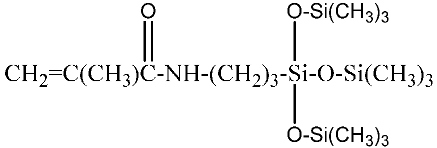 |
| **Si-NB3H** | 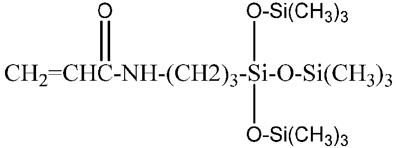 |
| **Si-NB2** | 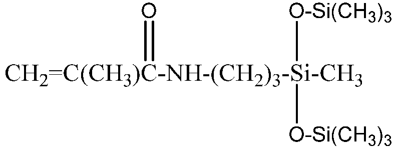 |
| **Si-B4** | 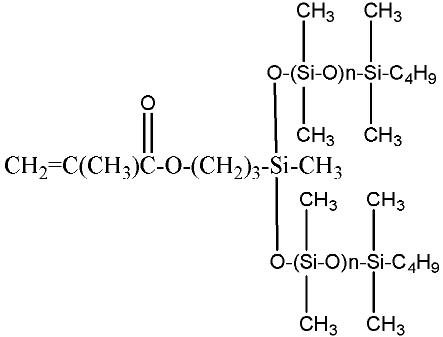 |
| **Si-B5** | 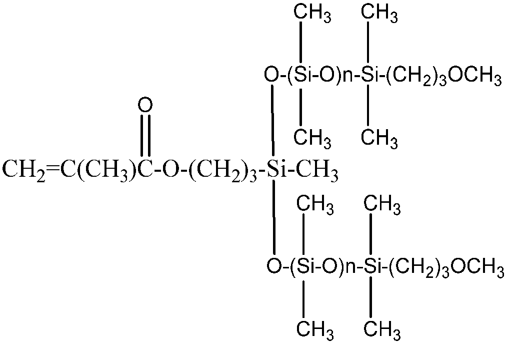 |
| **DM** | 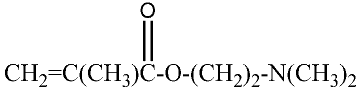 |
| **DN** | 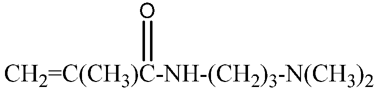 |
| **HEMA** | 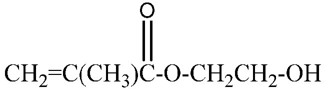 |
| **4-HBA** | 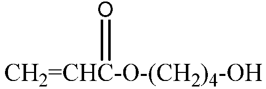 |

### Example 1

Into a 500 mL four-necked flask equipped with a reflux condenser, a nitrogen inlet tube, a thermometer, and a stirrer, were added 76 g Si-B3, 25 g DN, 8 g HEMA, and 110 g methyl ethyl ketone (hereinafter referred to as MEK). The resulting mixture was flushed with nitrogen gas for 30 minutes, and slowly heated up to a temperature of 50°C-60°C, followed by addition of 1.4 g peroxide initiator tert-butyl peroxypivalate in portions, and then allowed to react at 60°C for 20 hours to yield about 220 g polymer A solution having a solid content of about 50%. The solution was tested using a gas chromatography-mass spectrometry, and the residual mass concentration of each monomer was found to be below 0.1%, indicating that the monomer composition of the obtained polymer was almost identical to the added monomer composition.

The polymer A solution was added with 315 g water and 10 g glacial acetic acid, and stirred at 70°C for more than 1 hour, and then subjected to distillation under a reduced pressure to remove the MEK in the polymer A solution, to obtain an aqueous dispersion with 25% solid content.

### Example 2

Into a 500 mL four-necked flask equipped with a reflux condenser, a nitrogen inlet tube, a thermometer, and a stirrer, were added 48 g Si-B3, 28 g Si-5(average molecular weight of 500), 25 g DN, 8 g HEMA, and 110 g methyl ethyl ketone (hereinafter referred to as MEK). The resulting mixture was flushed with nitrogen gas for 30 minutes, and slowly heated up to a temperature of 50°C-60°C, followed by addition of 1.4 g peroxide initiator tert-butyl peroxypivalate in portions, and then allowed to react at 60°C for 20 hours to yield about 220 g polymer A solution having a solid content of about 50%. The solution was tested using a gas chromatography-mass spectrometry, and the residual mass concentration of each monomer was found to be below 0.1%, indicating that the monomer composition of the obtained polymer was almost identical to the added monomer composition.

The polymer A solution was added with 315 g water and 10 g glacial acetic acid, and stirred at 70°C for more than 1 hour, and then subjected to distillation under a reduced pressure to remove the MEK in the polymer A solution, to obtain an aqueous dispersion with 25% solid content.

### Example 3

Into a 500 mL four-necked flask equipped with a reflux condenser, a nitrogen inlet tube, a thermometer, and a stirrer, were added 76 g Si-B3, 25 g DN, 8 g 4-HBA, and 110 g methyl ethyl ketone (hereinafter referred to as MEK). The resulting mixture was flushed with nitrogen gas for 30 minutes, and slowly heated up to a temperature of 50°C-60°C, followed by addition of 1.4 g peroxide initiator tert-butyl peroxypivalate in portions, and then allowed to react at 60°C for 20 hours to yield about 220 g polymer A solution having a solid content of about 50%. The solution was tested using a gas chromatography-mass spectrometry, and the residual mass concentration of each monomer was found to be below 0.1%, indicating that the monomer composition of the obtained polymer was almost identical to the added monomer composition.

The polymer A solution was added with 315 g water and 10 g glacial acetic acid, and stirred at 70°C for more than 1 hour, and then subjected to distillation under a reduced pressure to remove the MEK in the polymer A solution, to obtain an aqueous dispersion with 25% solid content.

### Comparative Example 1

Into a 500 mL four-necked flask equipped with a reflux condenser, a nitrogen inlet tube, a thermometer, and a stirrer, were added 76 g Si-5(average molecular weight of 500), 25 g DN, 8 g HEMA, and 110 g methyl ethyl ketone (hereinafter referred to as MEK). The resulting mixture was flushed with nitrogen gas for 30 minutes, and slowly heated up to a temperature of 50°C-60°C, followed by addition of 1.4 g peroxide initiator tert-butyl peroxypivalate in portions, and then allowed to react at 60°C for 20 hours to yield about 220 g polymer A solution having a solid content of about 50%. The solution was tested using a gas chromatography-mass spectrometry, and the residual mass concentration of each monomer was found to be below 0.1%, indicating that the monomer composition of the obtained polymer was almost identical to the added monomer composition.

The polymer A solution was added with 315 g water and 10 g glacial acetic acid, and stirred at 70°C for more than 1 hour, and then subjected to distillation under a reduced pressure to remove the MEK in the polymer A solution, to obtain an aqueous dispersion with 25% solid content.

### Comparative Example 2

Into a 500 mL four-necked flask equipped with a reflux condenser, a nitrogen inlet tube, a thermometer, and a stirrer, were added 76 g Si-B3, 25 g DM, 8 g HEMA, and 110 g methyl ethyl ketone (hereinafter referred to as MEK). The resulting mixture was flushed with nitrogen gas for 30 minutes, and slowly heated up to a temperature of 50°C-60°C, followed by addition of 1.4 g peroxide initiator tert-butyl peroxypivalate in portions, and then allowed to react at 60°C for 20 hours to yield about 220 g polymer A solution having a solid content of about 50%. The solution was tested using a gas chromatography-mass spectrometry, and the residual mass concentration of each monomer was found to be below 0.1%, indicating that the monomer composition of the obtained polymer was almost identical to the added monomer composition.

The polymer A solution was added with 315 g water and 10 g glacial acetic acid, and stirred at 70°C for more than 1 hour, and then subjected to distillation under a reduced pressure to remove the MEK in the polymer A solution, to obtain an aqueous dispersion with 25% solid content.

### Performance Testing

The water dispersions synthesized in the examples and comparative examples were used as treating agents to test several items:
1) test on paper tableware: a 1wt% pulp solution was prepared and added with AKD sizing agent at 2wt% based on the dry weight of the paper and treating agents at 10 wt%, 6 wt%, and 3 wt%, respectively based on the dry weight of the paper and then manufactured into 10-inch discs weighting 20 g. The discs were tested with salad oil at 85°C for 20 minutes and rated according to permeation performance; or tested with boiling water at 100°C for 30 minutes and evaluated as passing or leaking.
2) test on paper: 50 g/m² thin papers were selected and treated by surface sizing with treating agents at the concentrations of 5 wt%, 4 wt%, and 3 wt%, respectively, and then tested for hot-oil-repellency and Cobb water absorption value.
3) test on paper: 230 g/m² cardboards were selected and treated by coating with treating agents at the concentrations of 5 wt%, 4 wt%, and 3 wt%, respectively, and then tested for hot-oil-repellency and Cobb water absorption value.
4) test on sandstone: the treating agents were diluted with water to 3 wt%, 2 wt%, and 1 wt% solutions. Sandstone samples were soaked with solutions, then removed and dried in air for 48 hours at a temperature not lower than 25°C, and then dropped thereon with salad oil and coffee to observe the wetting performance, and accordingly rated by score.

The performance test results of Examples 1 to 3 and Comparative Examples 1 to 2 are shown in Table 2.

**Table 2 Test Performance Comparison Table**

| | Example 1 | Example 2 | Example 3 | Comparative Example 1 | Comparative Example 2 |
|---|---|---|---|---|---|
| Silicon monomer I-1 (Si-B3) | 76 | 48 | 76 | | 76 |
| Silicon monomer I-2 ( Si-5) | | 28 | | 76 | |
| Monomer II | DN | DN | DN | DN | DM |
| Disc, hot-oil test 10wt% | 5 | 5 | 5 | 5 | 5 |
| Disc, hot-oil test 6wt% | 5 | 4 | 5 | 3 | 3 |
| Disc, hot-oil test 3wt% | 5 | 3 | 5 | 2 | 2 |
| Disc, boiling water test | Pass | Pass | Pass | Pass | Pass |
| 50 g paper, hot-oil repellency 5wt% | 5 | 5 | 5 | 5 | 4 |
| 50 g paper, hot-oil repellency 4wt% | 5 | 5 | 5 | 4 | 3 |
| 50 g paper, hot-oil repellency 3wt% | 5 | 4 | 5 | 3 | 2 |
| 50 g paper, Cobb 5wt% | 24 | 23 | 26 | 20 | 23 |
| 50 g paper, Cobb 4wt% | 24 | 23 | 27 | 21 | 25 |
| 50 g paper, Cobb 3wt% | 28 | 26 | 30 | 23 | 28 |
| 230 g paper, hot-oil repellency 5wt% | 5 | 5 | 5 | 5 | 4 |
| 230 g paper, hot-oil repellency 4wt% | 5 | 5 | 5 | 4 | 3 |
| 230 g paper, hot-oil repellency 3wt% | 5 | 4 | 5 | 3 | 2 |
| 230 g paper, Cobb 5wt% | 24 | 23 | 26 | 20 | 23 |
| 230 g paper, Cobb 4wt% | 24 | 23 | 28 | 21 | 25 |
| 230 g paper, Cobb 3wt% | 28 | 26 | 32 | 23 | 28 |
| Sandstone, salad oil 3wt% | 5 | 5 | 5 | 5 | 5 |
| Sandstone, salad oil 2wt% | 5 | 4 | 5 | 3 | 3 |
| Sandstone, salad oil 1wt% | 4 | 3 | 4 | 1 | 1 |
| Sandstone, coffee 3wt% | 5 | 5 | 4 | 5 | 5 |
| Sandstone, coffee 2wt% | 4 | 4 | 3 | 4 | 3 |
| Sandstone, coffee 1wt% | 3 | 3 | 2 | 3 | 2 |

From the performance test results of Example 1 and Comparative Example 1, it can be seen that the treating agent prepared using solely the silicon monomer I-1 exhibits superior oil-repellency at high dosages compared to that prepared using solely the silicon monomer I-2. However, when the dosage of the treating agent is reduced, the performance of the former is significantly better than that of the latter, indicating that the former has better oil-repellency and higher efficiency.

From the performance test results of Example 1 and Comparative Example 2, it can be seen that the treating agent prepared using monomer II (DN) demonstrates better oil-repellency than that prepared using monomer II (DM) at high dosages. However, when the dosage of the treating agent is reduced, the performance of the former is significantly better than that of the latter, indicating that the former has better oil-repellency and higher efficiency.

### Examples 4 to 10

Examples 4 to 10 were performed with a process substantially identical to that of Example 1, except that the silicon-containing monomer I-1 with the following different structures, namely Si-B3H (Example 4), Si-B2 (Example 5), Si-NB3 (Example 6), Si-NB3H (Example 7), Si-NB2 (Example 8), Si-B4 (average molecular weight of 500) (Example 9), and Si-B5 (average molecular weight of 500) (Example 10), were used to replace Si-B3. The polymer solutions were tested using gas chromatography-mass spectrometry, and the residual mass concentration of each monomer was found to be below 0.1%, indicating that the monomer composition of the obtained polymer was almost identical to the added monomer composition.

The testing methods were the same as in Example 1, and the test results for Examples 4 to10 are shown in Table 3.

**Table 3 Comparison Table of Test Performance**

| | Example 1 | Example 4 | Example 5 | Example 6 | Example 7 | Example 8 | Example 9 | Example 10 |
|---|---|---|---|---|---|---|---|---|
| Silicon monomer I-1 | Si-B3 | Si-B3H | Si-B2 | Si-NB3 | SiNB3H | Si-NB2 | Si-B4 | Si-B5 |
| Disc, hot-oil test 10wt% | 5 | 5 | 5 | 5 | 5 | 5 | 5 | 5 |
| Disc, hot-oil test 6wt% | 5 | 5 | 5 | 5 | 5 | 5 | 5 | 5 |
| Disc, hot-oil test 3wt% | 5 | 5 | 5 | 5 | 5 | 5 | 5 | 5 |
| Disc, boiling water test | Pass | Pass | Pass | Pass | Pass | Pass | Pass | Pass |
| 50 g paper, hot-oil repellency 5wt% | 5 | 5 | 5 | 5 | 5 | 5 | 5 | 5 |
| 50 g paper, hot-oil repellency 4wt% | 5 | 5 | 5 | 5 | 5 | 5 | 5 | 5 |
| 50 g paper, hot-oil repellency 3wt% | 5 | 5 | 4 | 5 | 5 | 4 | 4 | 4 |
| 50 g paper, Cobb 5wt% | 24 | 27 | 26 | 24 | 28 | 26 | 22 | 20 |
| 50 g paper, Cobb 4wt% | 24 | 28 | 27 | 24 | 29 | 27 | 22 | 22 |
| 50 g paper, Cobb 3wt% | 28 | 32 | 30 | 28 | 33 | 30 | 28 | 27 |
| 230 g paper, hot-oil repellency 5wt% | 5 | 5 | 5 | 5 | 5 | 5 | 5 | 5 |
| 230 g paper, hot-oil repellency 4wt% | 5 | 5 | 5 | 5 | 5 | 5 | 5 | 5 |
| 230 g paper, hot-oil repellency 3wt% | 5 | 5 | 4 | 5 | 5 | 5 | 4 | 4 |
| 230 g paper, Cobb 5wt% | 24 | 27 | 26 | 24 | 28 | 26 | 22 | 20 |
| 230 g paper, Cobb 4wt% | 24 | 29 | 27 | 25 | 29 | 28 | 22 | 22 |
| 230 g paper, Cobb 3wt% | 28 | 33 | 30 | 27 | 33 | 32 | 27 | 26 |
| Sandstone, salad oil 3wt% | 5 | 5 | 5 | 5 | 5 | 5 | 5 | 5 |
| Sandstone, salad oil 2wt% | 5 | 5 | 4 | 5 | 5 | 4 | 5 | 5 |
| Sandstone, salad oil 1wt% | 4 | 4 | 3 | 4 | 4 | 3 | 4 | 4 |
| Sandstone, coffee 3wt% | 5 | 5 | 5 | 5 | 5 | 5 | 5 | 5 |
| Sandstone, coffee 2wt% | 4 | 3 | 3 | 4 | 3 | 3 | 4 | 4 |
| Sandstone, coffee 1wt% | 3 | 2 | 2 | 3 | 2 | 2 | 3 | 3 |

From the examples and the comparative examples, it can be seen that the organosilicon polymer of the present application and the treating agent containing the polymer exhibit excellent oil-repellency, significantly improved oil-repellency efficiency, and also have good water-repellency.

Although some exemplary embodiments of the present invention have been illustrated and described, the present invention is not limited to the disclosed embodiments. On the contrary, those skilled in the art will recognize that some modifications and changes may be made to the described embodiments without departing from the spirit and scope of the present invention as described in the attached claims.

## Claims

1. An organosilicon polymer comprising a repeating unit derived from a monomer I and a repeating unit derived from a monomer II, the monomer I comprising a silicon monomer I-1 and an optional silicon monomer I-2, wherein
a) the general structural formula of the silicon monomer I-1 is shown in Formula I-1:
CH₂=C(R₁)-X-B-Z₁ I-1
in Formula I-1, R₁ is selected from hydrogen atom or a C₁-C₂₀ alkyl group; B is a C₁-C₂₀ alkylene group;
X is selected from the group represented by X-1 and the group represented by X-2,
-C(O)-O- X-1
-C(O)-N(R₂)- X-2
R₂ is selected from hydrogen atom or a C₁-C₂₀ alkyl group;
Z₁ is selected from the following group: 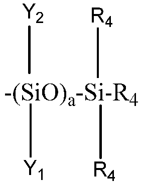
in group Z₁, R₄ is independently selected from a C₁-C₂₀ alkyl group, a C₆-C₂₀ aryl group, a C₇-C₁₂ aralkyl group, a C₇-C₁₂ alkylaryl group, or a R₅-O-R₆- group, and R₅ is selected from a C₁-C₁₀ alkyl group, a C₆-C₂₀ aryl group, a C₇-C₁₂ aralkyl group, or a C₇-C₁₂ alkylaryl group, and R₆ is a C₁-C₁₀ alkylene group, and 1≤a≤200;
Y₁ and Y₂ are the same or different and are independently selected from a C₁-C₂₀ alkyl group, a C₆-C₂₀ aryl group, a C₇-C₁₂ aralkyl group, or a C₇-C₁₂ alkylaryl group, and the structure of Formula (I), with the condition that when a is 1, Y₁ and/or Y₂ is the structure of Formula (I), and when a is greater than 1 and ≤ 200, at least one Y₁ is the structure of Formula (I) and/or at least one Y₂ is the structure of Formula (I): 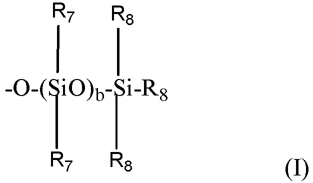
R₇ is independently selected from a C₁-C₂₀ alkyl group, a C₆-C₂₀ aryl group, a C₇-C₁₂ aralkyl group, or a C₇-C₁₂ alkylaryl group; R₈ is independently selected from a C₁-C₂₀ alkyl group, a C₆-C₂₀ aryl group, a C₇-C₁₂ aralkyl group, a C₇-C₁₂ alkylaryl group, or a R₉-O-R₁₀- group, wherein R₉ is a C₁-C₁₀ alkyl group, a C₆-C₂₀ aryl group, a C₇-C₁₂ aralkyl group or a C₇-C₁₂ alkylaryl group, and R₁₀ is a C₁-C₁₀ alkylene group, and 0≤b≤200;
the general structural formula of the silicon monomer I-2 is shown in Formula I-2:
CH₂=C(R₁)-X-B-Z₂ I-2
in Formula I-2, R₁ is selected from hydrogen atom or a C₁-C₂₀ alkyl group; B is a C₁-C₂₀ alkylene group;
X is selected from the group represented by X-1 and the group represented by X-2,
-C(O)-O- X-1
-C(O)-N(R₂)- X-2
R₂ is selected from hydrogen atom or a C₁-C₂₀ alkyl group;
Z₂ is selected from the following group: 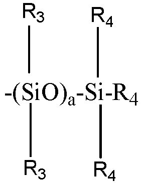
in group Z₂, R₃ is independently selected from a C₁-C₂₀ alkyl group, a C₆-C₂₀ aryl group, a C₇-C₁₂ aralkyl group, or a C₇-C₁₂ alkylaryl group, and R₄ is selected from a C₁-C₂₀ alkyl group, a C₆-C₂₀ aryl group, a C₇-C₁₂ aralkyl group, a C₇-C₁₂ alkylaryl group, or a R₅-O-R₆- group, and R₅ is selected from a C₁-C₁₀ alkyl group, a C₆-C₂₀ aryl group, a C₇-C₁₂ aralkyl group, or a C₇-C₁₂ alkylaryl group, and R₆ is a C₁-C₁₀ alkylene group, and 1≤a≤200;
b) the general structural formula of the monomer II is shown in Formula II:
CH₂=C(R₁)-C(O)-NR₂-B-N(R₃R₄) II
wherein R₁ and R₂ are independently selected from hydrogen atom or a C₁-C₂₀ alkyl group; B is a C₁-C₂₀ alkylene group; R₃ and R₄ are independently selected from hydrogen atom, a C₁₋C₁₈ alkyl group, a hydroxyethyl group or a benzyl group, or R₃ and R₄ are jointed and, together with the nitrogen atom, form a morpholino group, a piperidino group, or a pyrrolidino group.

2. The organosilicon polymer of claim 1, wherein, the organosilicon polymer further comprises a repeating unit derived from monomer III,
the general structural formula of the monomer III is shown in Formula III:
CH₂=C(R₁)-G-(R₂O)_{q}-R₃ III
in Formula III, R₁ represents hydrogen atom or methyl, R₂ is independently a C₁-C₆ alkylene group, preferably a C₂-C₄ alkylene group, q is an integer from 1 to 50, preferably from 1 to 20; R₃ represents hydrogen atom or a C₁-C₂₀ alkyl group, preferably hydrogen atom or a C₁-C₁₀ alkyl group, more preferably hydrogen atom or a C₁-C₃ alkyl group;
wherein G is selected from the group represented by G-1 and the group represented by G-2,
-C(O)-O-(CH₂)ₙ- G-1
-C(O)-N(R₄)-(CH₂)ₙ- G-2
R₄ represents hydrogen atom or methyl, n is an integer from 0 to 10, preferably from 0 to 5.

3. The organosilicon polymer of claim 1 or 2, wherein, based on the mass percentage, the proportion of repeating units derived from the silicon monomer I-1 in the total amount of repeating units derived from the silicon monomer I-1 and the silicon monomer I-2 is 1% to 100%, 5% to 100%, 10% to 100%, or 50% to 100%.

4. The organosilicon polymer of any one of claims 1 to 3, wherein, the mass content of repeating units derived from the silicon monomer I-1 and the silicon monomer I-2 in the polymer is 30% to 90%, preferably 40% to 85%, more preferably 50% to 80%;
and/or the mass content of repeating units derived from the monomer II in the polymer is 5% to 65%, preferably 10% to 50%, more preferably 15% to 45%;
and/or the mass content of repeating units derived from the monomer III in the polymer is 1% to 30%, preferably 3% to 15%, more preferably 5% to 10%.

5. The organosilicon polymer of any one of claims 1 to 4, wherein,
in the silicon monomer I-1 and the silicon monomer I-2, R₁ is selected from hydrogen atom or methyl, B is a C₁-C₁₀ alkylene group, preferably a C₁-C₆ alkylene group;
in the silicon monomer I-1 and the silicon monomer I-2, in group X, R₂ is selected from hydrogen atom or methyl;
in the silicon monomer I-1, in group Z₁, R₄ is independently selected from a C₁-C₁₀ alkyl group, a C₆-C₁₀ aryl group, a C₇-C₁₂ aralkyl group, a C₇-C₁₂ alkylaryl group, or a R₅-O-R₆- group, wherein R₅ is selected from a C₁-C₁₀ alkyl group, a C₆-C₁₀ aryl group, a C₇-C₁₂ aralkyl group, or a C₇-C₁₂ alkylaryl group, and R₆ is a C₁-C₁₀ alkylene group, and 1≤a≤80; R₇ is independently selected from a C₁-C₁₀ alkyl group, a C₆-C₁₀ aryl group, a C₇-C₁₂ aralkyl group, or a C₇-C₁₂ alkylaryl group; R₈ is independently selected from a C₁-C₁₀ alkyl group, a C₆-C₁₀ aryl group, a C₇-C₁₂ aralkyl group, a C₇-C₁₂ alkylaryl group, or a R₉-O-R₁₀- group, wherein R₉ is a C₁-C₁₀ alkyl group, a C₆-C₁₀ aryl group, a C₇-C₁₂ aralkyl group or a C₇-C₁₂ alkylaryl group, R₁₀ is a C₁-C₁₀ alkylene group, and 0≤b≤80;
in the monomer II, R₁ and R₂ are selected from hydrogen atom or methyl; B is a C₁-C₁₀ alkylene group, preferably a C₁-C₆ alkylene group; R₃ and R₄ are independently selected from hydrogen atom, a C₁-C₃ alkyl group, a hydroxyethyl group or a benzyl group, or R₃ and R₄ are jointed and, together with the nitrogen atom, form a morpholino group, a piperidino group, or a pyrrolidino group.

6. The organosilicon polymer of any one of claims 1 to 5, wherein,
the group Z₁ is selected from one or more of the following structures i-1 to i-4: 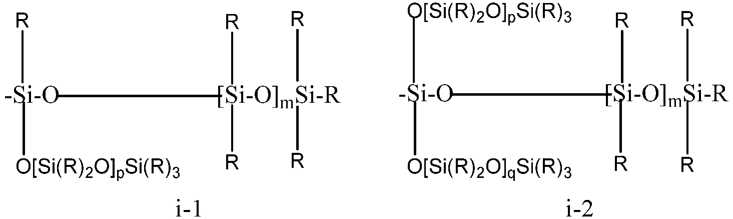 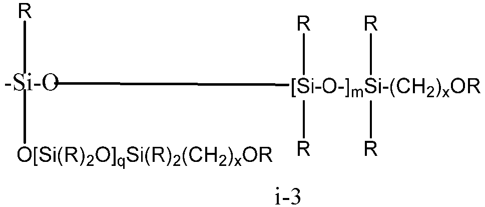 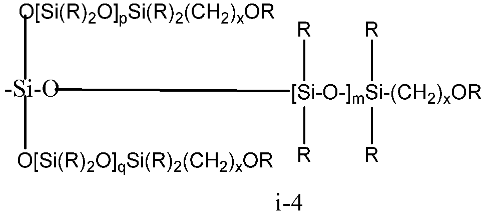
preferably Z₁ is selected from one or more of the following structures: 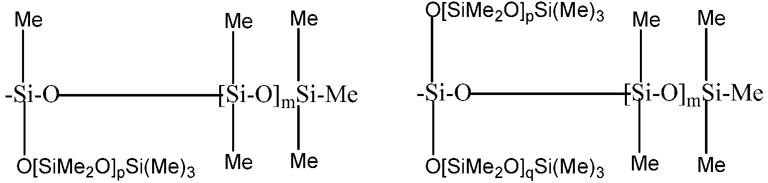 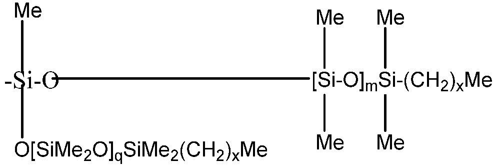 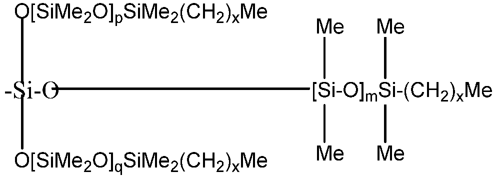 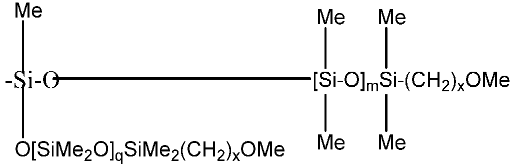 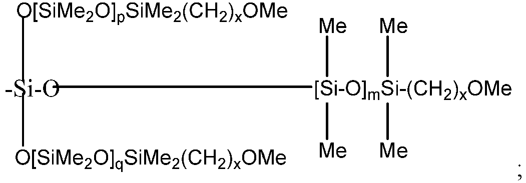
the group Z₂ is selected from one or more of the following structures ii-1 to ii-2: 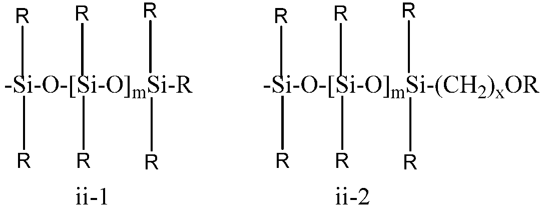
preferably Z₂ is selected from one or more of the following structures: 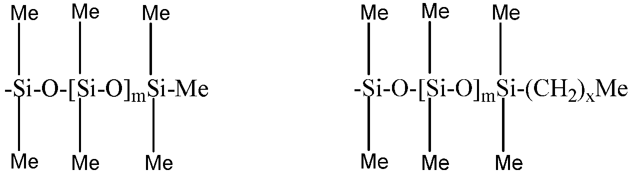 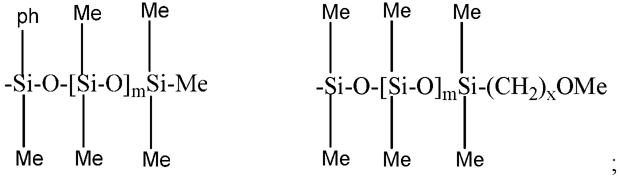
wherein Ris independently selected from a C₁-C₁₀ alkyl group, a C₆-C₁₀ aryl group, a C₇-C₁₂ aralkyl group, or a C₇-C₁₂ alkylaryl group;
Me represents methyl, ph represents phenyl, 1≤m+1≤60, preferably 1≤m+1≤30; 0≤p≤60, preferably 0≤p≤30; 0≤q≤60, preferably 0≤q≤30; 1≤x≤9, preferably 1≤x≤7, each x is independently the same or different.

7. The organosilicon polymer of any one of claims 1 to 6, wherein,
the silicon monomer I-1 is selected from:
CH₂=C(CH₃)C(O)-O-(CH₂)₃Si(OSi(CH₃)₃)₃,
CH₂=CHC(O)-O-(CH₂)₃Si(OSi(CH₃)₃)₃,
CH₂=C(CH₃)C(O)-O-(CH₂)₃Si(CH₃)(OSi(CH₃)₃)₂,
CH₂=CHC(O)-O-(CH₂)₃Si(CH₃)(OSi(CH₃)₃)₂,
CH₂=C(CH₃)C(O)-NH-(CH₂)₃Si(OSi(CH₃)₃)₃,
CH₂=CHC(O)-NH-(CH₂)₃Si(OSi(CH₃)₃)₃,
CH₂=C(CH₃)C(O)-NH-(CH₂)₃Si(CH₃)(OSi(CH₃)₃)₂,
CH₂=CHC(O)-NH-(CH₂)₃Si(CH₃)(OSi(CH₃)₃)₂,
CH₂=C(CH₃)C(O)-O-(CH₂)₃Si(OSi(CH₂CH₃)₃)₃,
CH₂=CHC(O)-O-(CH₂)₃Si(OSi(CH₂CH₃)₃)₃,
CH₂=C(CH₃)C(O)-O-CH₂-Si(OSi(CH₃)₃)₃,
CH₂=C(CH₃)C(O)-O-(CH₂)₃Si(CH₃)[O-[Si(CH₃)₂O]n-Si(CH₃)₂C₄H₉]₂ (0≤n≤25);
and/or
the silicon monomer I-2 is selected from:
CH₂=C(CH₃)C(O)-O-(CH₂)₃[Si(CH₃)₂O]n-Si(CH₃)₂C₄H₉ (1≤n≤25),
CH₂=C(CH₃)C(O)-O-(CH₂)₃[Si(CH₃)₂O]n-Si(CH₃)₂C₈H₁₇ (1≤n≤25),
CH₂=C(CH₃)C(O)-O-(CH₂)₃[Si(CH₃)₂O]n-Si(CH₃)₃ (1≤n≤25);
and/or
the monomer II is selected from one or more of the following: dimethylaminoethyl (meth)acrylamide, diethylaminoethyl (meth)acrylamide, dipropylaminoethyl (meth)acrylamide, dimethylaminopropyl (meth)acrylamide, diethylaminopropyl (meth)acrylamide, and dipropylaminopropyl (meth)acrylamide; and/or
the monomer III is selected from one or more of the following: 2-hydroxyethyl (meth)acrylate, 2-hydroxypropyl (meth)acrylate, 2-hydroxybutyl (meth)acrylate, 4-hydroxybutyl (meth)acrylate, polyethylene glycol mono(meth)acrylate, polypropylene glycol mono(meth)acrylate, and methoxy polyethylene glycol (meth)acrylate, preferably 2-hydroxyethyl methacrylate, 4-hydroxybutyl acrylate.

8. A treating agent, comprising the organosilicon polymer of any one of claims 1 to 7 and a solvent, wherein the solvent comprises water and/or an organic solvent,
preferably, the organic solvent is one or more of acetone, methyl ethyl ketone, 4-methyl-2-pentanone, ethyl acetate, butyl acetate, N-methyl-2-pyrrolidone, N,N-dimethyl formamide, ethanol, isopropanol, n-propanol, butyl carbitol, and dipropylene glycol methyl ether.

9. A method for preparing the treating agent of claim 8, comprising the following steps:
(1) polymerizing monomers in an organic solvent to obtain a polymer solution;
optionally, (2) adding water to the polymer solution for dispersion, and then removing the organic solvent; or removing the solvent firstly and then adding water for dispersion;
optionally, (3) adding an acid to the polymer solution for converting an amino group into an ammonium salt;
optionally, (4) treating the polymer solution with an aqueous hydrogen peroxide for converting an amino group into a nitrogen oxide.

10. Use of the organosilicon polymer of any one of claims 1 to 7 or the treating agent of claim 8 or the treating agent prepared by the method of claim 9 in fiber fabrics, leathers, non-woven fabrics, asbestos, furs, concretes, natural stones, paper products, or plastics.

11. A product treated with the organosilicon polymer of any one of claims 1 to 7 or the treating agent of claim 8 or the treating agent prepared by the method of claim 9, wherein the product is selected from fiber fabrics, leathers, non-woven fabrics, asbestos, furs, concretes, natural stones, paper products, or plastics.

12. A method for treating a product, comprising contacting the product with the organosilicon polymer of any one of claims 1 to 7 or the treating agent of claim 8 or the treating agent prepared by the method of in claim 9, wherein the product is selected from fiber fabrics, leathers, non-woven fabrics, asbestos, furs, concretes, natural stones, paper products, or plastics,
preferably, the contacting is achieved through wet-end addition, surface sizing, or coating processes.
